# EUROPEAN PATENT SPECIFICATION

(11) **EP 3 398 743 B1**
(45) Date of publication and mention of the grant of the patent: **15.01.2020**
(21) Application number: 16826201.2
(22) Date of filing: 29.12.2016
(51) Int. Cl.: B27J 5/00

(54) **AUTOMATIC CORK STOPPER PUNCHING SYSTEM**
AUTOMATISCHES KORKSTOPFENSTANZSYSTEM
SYSTÈME DE POINÇONNAGE AUTOMATIQUE DE BOUCHONS DE LIÈGE

(30) Priority: 29.12.2015 PT 2015109060
(43) Date of publication of application: 07.11.2018
(73) Proprietor: Amorim Cork Research, Lda., 4535-186 Mozelos Vfr (PT)
(72) Inventor: DA ROCHA E SILVA, Anacleto Paulo, 4475-111 Maia (PT); ALVES, André De Sousa, 4520-606 São João De Ver (PT); DA SILVA, Luís Filipe Peixoto Machado, 4535-193 Mozelos Vfr (PT)
(74) Representative: RCF - Protecting Innovation, S.A.
(86) International application number: PCT/PT2016/050028
(87) International publication number: WO 2017/116254

(56) References cited:
- ES-A1- 2 364 614
- FR-A- 699 311
- FR-A1- 2 712 526
- PT-B- 98 179
- PT-B- 101 690
- US-A- 1 012 320
- US-A- 2 615 480

## Description

### FIELD OF THE INVENTION

The present invention relates to a cork stopper punching automatic system according to the preamble of claim 1. Such a system is disclosed by document FR 2 712 526. The present invention finds application in the cork industry, namely in the industrial process of stopper production.

### BACKGROUND OF THE INVENTION

The production of cork stoppers is performed in several stages based on various manufacturing processes, which can be manual or mechanical, automated or semi-automated.

Cork planks removed from cork-oaks are cut into approximately parallelepiped slices, which are later pierced by an operation commonly referred to in the art as "punching" or "drilling" to obtain the stoppers. Said cork strips are typically called in the art as strips, and the band punching or drilling action to obtain cork stoppers is known as "stopper punching" or "stopper drilling", this terminology being also adopted herein.

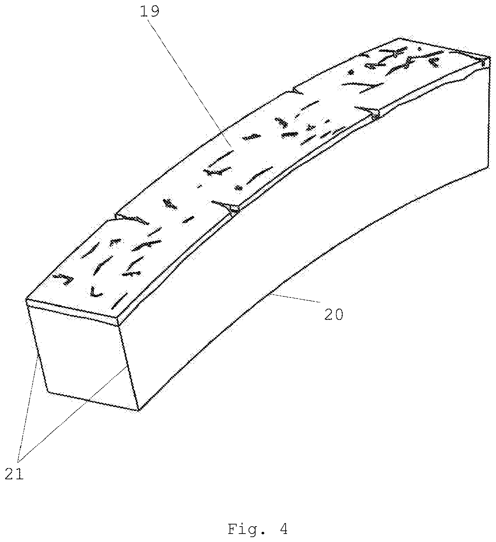

Said strips have four main sides, called back, belly and faces, as shown in Fig. 4. Back is opposite the belly and faces are opposite each other. Back (shown in Fig. 4 with the reference number 19) corresponds to the outside of the cork-oak bark and belly (shown in Fig. 4 with the reference number 20) corresponds to the inside of the bark, which is attached to the cork-oak trunk before cork stripping. Faces (shown in Fig. 4 with the reference number 21) are the sides (opposite each other) contiguous to back and belly. Punching operations are performed on strip faces. Generally, strips are cut to size with dimensions comprised between 40 to 56 mm in width, although dimensions of 47 or 51 mm in width are preferred.

Being a natural product, the cork strip has several types of defects, randomly distributed, which seriously affect the quality of the stoppers produced. The most common defects are the "costa", which is the presence of cork bark in the stopper; the "bicho", which is the presence of holes and/or channels made by cork ants or other small insect when the cork on the cork-oak is in its natural development stage, and cracks or crevices. Such defects affect the quality of the produced stoppers, namely in the sealing ability of corks affected by such defects.

For this reason, experienced operators usually made a visual selection of the best areas on the strip faces, from which the corks were removed by punching. This process was essentially manual, the strip area chosen by the operator being manually positioned against the drill, which was then actuated by a pedal or mechanically. In addition to the production efficiency limitations, these processes were mainly dangerous to the physical integrity of the operators.

Naturally, efficiency and safety of stoppers punching mechanical equipment have been evolving with the automation of the viewing, transport and punching processes.

The patent PT 98179 made it possible to overcome visual selection limitations. PT 98179 describes a display and control system for a cork stopper production automatic machine. This system uses image processing into grey levels and laser inspection techniques. Binary images taken by two cameras that analyse the cork strip detect their defects and determine the best area for punching.

This display system, despite being revolutionary using the available technology available at the time, had integration difficulties with the actual punching system, resulting in a system that didn't allow high production rates or synchronization with the strip transportation and punching of the same.

In patent PT 101690B a cork stopper punching smart machine is described, which is characterized in that it uses four stations where the steps of strip feeding, and belly reading, strip reading and strip evacuation occur simultaneously and in a synchronized manner.

In spite of significant improvements introduced by such stopper production machine, in which reading of three strip sides was already performed (belly and faces), the integration of the display unit into a circular transport and punching mechanical device results in an extremely complex machine and therefore costly and difficult to implement and maintain.

In accordance with the foregoing, a need exists for a cork stopper punching automatic system that is simpler, compact and accurate, enabling to optimize, in each punched strip, the number of standardized quality corks in the industry with higher efficiency.

### SUMMARY OF THE INVENTION

The present invention relates to a cork stopper punching automatic system according to claim 1.

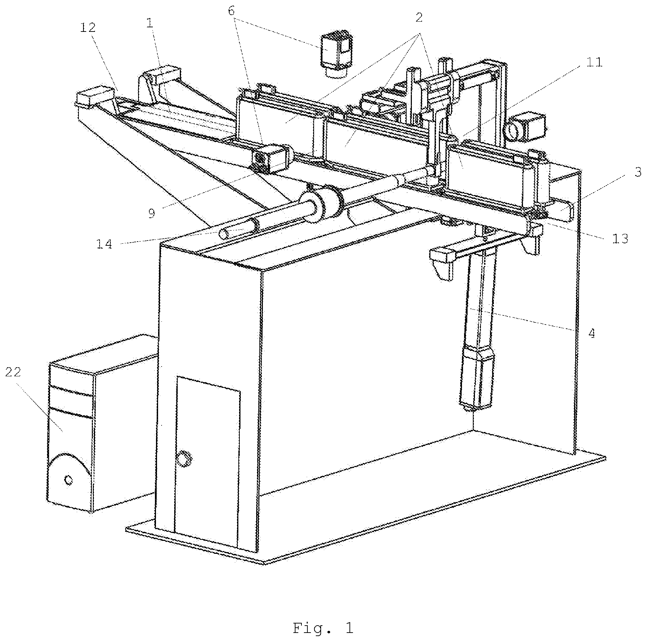

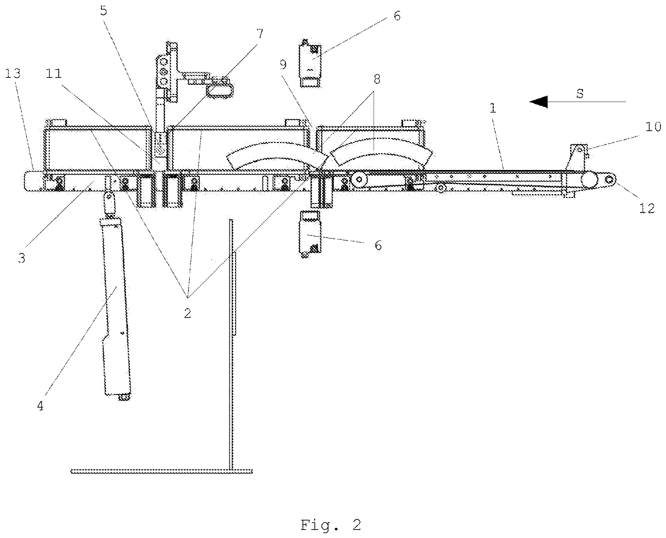

With reference to Figs. 1 to 3, the system comprises:
a support frame (3) defining a working plane (P) and having a first end (12) and a second end (13), which define an operating direction (S), the frame comprising:
   - a cork strip feeder (1) disposed on said first end (12),
   - three cork strip conveyors (2) sequentially arranged in line and separated from one another by a first strip reading space (9) and a second strip punching space (11);
at least three cameras (6) arranged to capture images from strip reading space (9);
a punching assembly (14) arranged to operate in strip punching space (11);
a vertical actuator (4) arranged to angularly displace second end (13) of support frame (3) or to displace punching assembly (14) perpendicular to working plane (P);
a processing unit (22) connected in data communication with cameras (6), wherein processing unit (22) comprises controllers for controlling actuator (4), conveyors (2) and punching assembly (14) in accordance to data from cameras (6).

In a preferred embodiment, for the angular displacement of said second end said frame (3) is hinged at its first end (12) on a pivot axis (10), and vertical actuator (4) is arranged to angularly displace second end (13) around said pivot axis (10).

Preferably, each cork strip conveyor (2) is constituted by a pair of conveyor belts (15) parallel to each other, wherein each belt (15) of said pair is arranged perpendicularly to working plane (P) and is movable parallel to same plane (P), and in the operating direction (S). In a particular aspect, at least one of the conveyor belts (15) of said belt pair is also adjustable perpendicularly to operating direction (S) to be able to better grip a cork strip (8).

In an aspect, punching assembly (14) comprises a tubular drill (5) and a stopper extraction member (17) disposed within the drill (5), wherein drill (5) is axially moveable relative to extraction member (17), which in turn it is stationary. Preferably, said punching assembly (14) further comprises a press (7) able to restrain a cork strip to be punched, wherein said press (7) is axially moveable relative to drill (5) and is configured to accommodate axial movement of the latter. Most preferably, punching assembly (14) further comprises a stop (16) for receiving drill (5) at the end of a drilling.

In another embodiment, the system further comprises at least another camera (18) arranged to capture images from strip punching space (11), wherein said camera (18) is also connected in data communication with processing unit (22).

### BRIEF DESCRIPTION OF THE DRAWINGS

The following is a description of the invention with reference to the accompanying drawings, in which:
Fig. 1 shows a perspective view of one embodiment of the system of the present invention.
Fig. 2 shows a side view of the exemplary system shown in Fig. 1.
Fig. 3 shows a plan view of the system of Fig. 1.
Fig. 4 shows an example of a cork strip and of its major sides.

### DETAILED DESCRIPTION OF THE INVENTION

The present invention relates to cork stopper punching automatic system.

The system of the invention enables to maximize the number of good quality stoppers which can be produced from each strip used. This is achieved by the interaction of a set of cameras connected in data communication with a processing unit, which, in turn, controls a mechanical unit using actuators, so that said strips are punched in their optimal areas, thereby producing stoppers of excellent quality and in an optimized number for each strip.

In the context of the present description the term "comprising" is to be understood as "including, among others". As such, said term should not be interpreted as "consisting only of".

It should be noted that any X value presented in the course of the present description is to be interpreted as an approximate value of the actual X value, since such approximation to the actual value would reasonably be expected by the person skilled in the art due to experimental and/or measurement conditions which introduce deviations from the actual value.

With reference to Figs. 1 to 3, the cork stopper punching automatic system of the present invention comprises:
a support frame (3) defining a working plane (P) and having a first end (12) and a second end (13), which define an operating direction (S), the frame comprising:
   - a cork strip feeder (1) disposed on said first end (12),
   - three cork strip conveyors (2) sequentially arranged in line and separated from one another by a first strip reading space (9) and a second strip punching space (11);
at least three cameras (6) arranged to capture images from strip reading space (9);
a punching assembly (14) arranged to operate in strip punching space (11);
a vertical actuator (4) arranged to angularly displace second end (13) of support frame (3) or to displace punching assembly (14) perpendicular to working plane (P);
a processing unit (22) connected in data communication with cameras (6), wherein processing unit (22) comprises controllers (not shown in figures) for controlling actuator (4), conveyors (2) and punching assembly (14) in accordance to data from cameras (6).

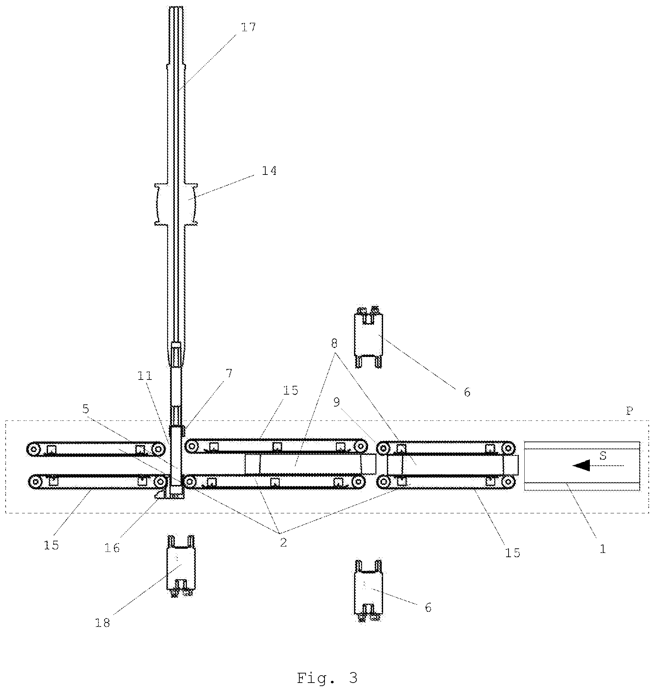

Said working plane (P) is shown in Fig. 3, and corresponds to the plane travelled by strips (8) during the operation of the system. Plane (P) is defined by the support frame (3), as shown.

Operating direction (S) refers to the direction followed by the cork strips in the punching process performed by the invention system, that is, cork strips (8) not yet punched enter into the first end (12) area of support frame (3) by means of the feeder (1) and exit, after being punched, through the second end (13) of said frame (3).

Support frame (3) comprises a cork strip feeder (1), which is disposed at the first end (12) or near thereto and it operates to deliver the cork strips (8) to the first of the strip conveyors (2). The feeding of the cork strips (8) to the conveyors (2) is typically made in the form of "trains" or strip queues. The feeder (1) can be a conveyor belt, a belt or a feeding canvas, or any other member that allows performing the function of feeding cork strips (8) to the system of the invention.

Support frame (3) further comprises three cork strip conveyors (2) which main function is to drive the strips along the operating direction (S) . These conveyors (2) are physically independent of each other although they work in synchrony as will be seen below.

In a preferred embodiment, each cork strip conveyor (2) is constituted by a pair of conveyor belts (15) parallel to each other, wherein each belt (15) of said pair is arranged perpendicularly to working plane (P) and is moveable parallel to the same plane (P) and along the operating direction (S) . The advantage of such conveyor belts (15) is that, in addition to the transport function of strips (8), they additionally have the function of gripping said strips (8) along the operating direction (S). On the other hand, this configuration of pairs of conveyor belts (15) allows the belly and back of the strips to be viewed, by means of visualization cameras (6, 18), from a lower position and another upper position with respect to working plane (P), as the strips traces are not lying on a transport surface, since each pair of conveyor belts (15) supports and holds said strips (8) sideways, by means of their faces.

Preferably, at least one of the conveyor belts (15) of each pair is also adjustable perpendicularly to the operating direction (S) for a better grip of a cork strip (8) against the other belt (15) of the same pair. Such additional improved gripping effect can be obtained by spring action, by pneumatic adjustment, mechanical or combined, which will further allow to accommodate strip variations in width, imperfections or discontinuities. In case of only one adjustable belt (15) of the respective pair is used, it is preferred that such adjustable belt (15) is on the same side of the punching assembly (14).

As mentioned, cork strip conveyors (2) are separated in the operating direction (S) by a first space (strip reading space (9)) from which at least three cameras (6) capture images, and by a second space (punching space (11) in which the actual punching operations are performed.

In fact, the existence of the strip reading space (9) allows the capture of images of all sides of a strip (8) (including the back, if desired) which goes through it when it passes from the first conveyor (2) to the second conveyor (2) along the operating direction (S). Data is sent to the processing unit (22), which in turn will control the punching in accordance to the images taken at this point.

On the other hand, the strip punching space (11) located between the second conveyor (2) and the third conveyor (2) has the function of allowing access of the punching assembly (14) to the strip so that it could be punched and after the punching it continues its movement in the operating direction (S) by means of the third conveyor (2) towards the area of the second end (13) where it is subsequently discarded.

In one embodiment of the invention, the system comprises at least another camera (18) arranged to capture images from the strip punching space (11), said camera (18) being connected in data communication with processing unit (22). Data from this camera (18) will allow to offset deviations of strips (8) when they pass between conveyors (2) and those caused by previous punching operations, thereby contributing to improve the system's accuracy.

Strip reading space (9) has a size comprised in the range of 15 to 50 mm, preferably 15 to 40 mm. The strip punching space (11) has a size comprised in the range of 25 to 80 mm, preferably 30 to 60 mm.

Such a design of conveyors (2) separated by spaces (9, 11) allows to create a device compact and simpler than existing systems in the prior art, but also more effective since it ensures a complete reading of all strip sides to be punched and a subsequent stability and accuracy in the punching operation.

To ensure a selective punching of the cork strips (8) in order to optimize the number of corks with high quality as mentioned above it is required that the system can vary the relative position of the strip relative to the drill immediately before the punching action under the control of processing unit (22). For this purpose, support frame (3) should be vertically (vertically means perpendicularly to working plane (P)) movable with respect to punching assembly (14) vertically stationary; or punching assembly (14) should be vertically movable relatively to support frame (3) vertically stationary. Naturally both the support frame (3) and the punching assembly (14) could be movable perpendicularly to working plane (P), this solution being however more complex, which makes it less suitable than any of the previous solutions.

Thus, in a preferred embodiment of the invention, frame (3) is articulated at its first end (12) on a pivot axis (10) and vertical actuator (4) is arranged to angularly displace said second end (13) around said pivot axis (10). That is, when actuated by vertical actuator (4), second end (13) has a main component of displacement perpendicular to working plane (P) and a secondary component of displacement parallel to working plane (P) . Said main displacement component corresponds to the useful part of the displacement which will be used to locate the strip to be punched in the correct punching position, the value of said secondary displacement component being practically negligible relative to the value of the main component. It should be noted that in addition of having a very small value, the secondary displacement component hinders the punching process and, as such, should be compensated by the system with a view to its cancellation, in order to optimize the number of drills to perform on a strip. This embodiment has the advantage of providing simplicity and mechanical strength to the system and also ensures that insertion of cork strips (8) into the strip feeder (1) is always performed at the same height, facilitating the automation of this operation upstream of the system of the present invention.

In an alternative embodiment, vertical actuator (4) is arranged to displace punching assembly (14) perpendicularly to working plane (P).

With regard to punching assembly (14), it comprises, in a preferred embodiment, a tubular drill (5) and a stopper extraction member (17) disposed within the drill (5), wherein the drill (5) is axially movable in relation to extraction member (17), which is stationary. This design makes it possible to compactly associate the functions of punching and of removing stoppers from the inside of the drill. To improve the punching efficiency by reducing the forces involved in this operation, said tubular drill (5) can be rotated. However, the punching operation in the context of the invention may be performed by punching the strip by means of a tubular piercing device without resorting to rotation movements.

Additionally, to further improve the performance of the punching operation, punching assembly (14) also comprises a press (7) to restrain a cork strip to be punched; wherein said press (7) is axially movable relative to drill (5) and is configured to accommodate the axial movement of the latter. In this case, said press (7) presses the strip before the punching action is performed, the press (7) being configured to allow the tubular drill (5) to pass therethrough.

Moreover, punching assembly (14) can comprise a stop (16) for receiving the drill (5) at the end of a drilling. Such stop (16) can be used together with press (7) mentioned above. In the latter case, stop (16) acting on strip (8) also serves as a counter pressure member against the pressure exerted by press (7), avoiding harmful deviations of strip (8) at the time of punching. Of course, stop (16) can be used independently of the existence of a press (7) in the punching assembly (14).

Processing unit (22) is responsible for controlling, by means of controllers, actuator (4), conveyors (2) and punching assembly (14) in accordance with data from cameras (6, 18). Cameras (6, 18) provide precise indications regarding the areas to be punched and location of the strip, which are processed and executed by said processing unit (22). The processes and means specifically used for performing control and command of the system of the invention are contemplated in the state of the art and will not be described in more detail herein.

### Most preferred embodiment of the invention

With reference to Fig. 1, the preferred cork stopper punching automatic system comprises a frame (3) hinged at its first end (12) on a pivot axis (10) and a vertical actuator (4) arranged to angularly displace the second end (13) around said pivot axis (10).

The frame (3) further comprises a conveyor belt (1) feeding three pairs of transport conveyor belts (15), the belts (15) of each pair being parallel to each other, wherein each belt (15) of said pair is disposed perpendicularly to working plane (P) and is movable parallel to same plane (P) and in the operating direction (S), and the belt pairs being disposed sequentially in line and successively separated by a first strip reading space (9) and a second strip punching space (11).

There are four cameras (6) arranged to capture images of the four main sides of the strips passing through space (9). To this end, support frame (3) is shaped as an armature to enable a strip (8) to be viewed from a lower part of frame (3).

The system also comprises a punching assembly (14) arranged to actuate in second space (11), this punching assembly (14) being constituted by a tubular drill (5), a stopper extraction member (17) of the rod type, disposed within the drill (5), a press (7) axially movable relative to drill (5) and configured to accommodate axial movement of the latter, and a stop (16) for receiving the drill (5) at the end of a drilling.

There is a further camera (18) arranged to capture images of punching space (11) in order to compensate strip (8) deviations.

The system also comprises a processing unit (22), such as a computer, connected in data communication with cameras (6) and camera (18), the processing unit (22) comprising controllers that control the vertical actuator (4), the pairs of transport conveyor belts (15) and the punching assembly (14) in accordance with data from the cameras (6, 18).

### Description of the operation of the most preferred embodiment of the invention

The operation of the most preferred embodiment is herein described by way of example and without limitation. System operation is naturally subjected to the required adaptations to other embodiments.

Cork strips (8) are placed on the feed conveyor belt (1), preferably with the belly (20) side facing down, although they may also be placed with the belly facing upwards. This versatility in the placement of strips is possible thanks to the use of four cameras (6) which capture images from all main sides (19, 20, 21) of the cork strip. The feeding is done in a sequence or "train" of strips.

Then, the strips are delivered to the first of three pairs of transport conveyor belts (15) which, in turn, delivers the strip (8) to the second pair of belts (15).

When strip (8) passes through space (9) between the first two pairs of conveyor belts (15) it is photographed, on all sides, by the four cameras (6), which thereby captures images of texture and depths (location) of the cork strip (8). The data captured by the cameras is sent to processing unit (22), which will control the movements of both the pair of belts (15) and the vertical actuator (4) and punching assembly (14).

In fact, processing unit (22) analyses the images taken by cameras (6) and determines the optimal areas for punching the cork strip (8) which was photographed. The vertical actuator (4) is actuated in order to vertically moving the free end (13) of support frame (3) so as to properly position the strip (8) for punching of the areas determined as optimal.

After the capture of images in space (9), strip (8) advances towards the second pair of belts (15). Its passage through punching space (11), between the second pair and the third pair of conveyor belts (15), is also photographed by the other camera (18) which sends the images to the processor, which will make minor adjustments to the strip position required before its punching. It should be noted that although well secured by the pairs of conveyor belts (15), strips (8) may suffer slight deviations from their position initially read by cameras (6), especially in the passage between the second and third pair of belts (15), as well as due to the successive punching operations performed in same strip (8). To make the required corrections, the controllers of processing unit (22) will actuate the vertical actuator (4), which in turn will move frame (3) for what is strictly necessary to correct its position.

In space (11) stoppers are punched. For that purpose, following instructions from processing unit, the movement of belts (15) is stopped and strip (8) is pressed between press (7) and stop (16), the punching of strip (8) being then performed by advancing tubular drill (5) which passes through the inside of press (7) and ends in stop (16). At the time of the punching, the tubular drill (5) rotating against one of the faces (21) of cork strip (8) perforates the strip withdrawing a stopper which will be housed inside the tubular body of drill (5). After the advance movement in which a stopper is housed inside the drill (5), the same then moves in the opposite direction, with an axial backward movement relative to extraction member (17) which remains immobilized and which, at a certain point, will meet the stopper remaining inside the drill tubular body, forcing it to leave the inside of drill (5). The released stoppers fall by gravity or with the aid of a blow, being collected in a collection container. Then press (7) moves backwards so as to release strip (8) leaving it ready for a new punching position or moving it towards its final exit from space (11) after completion of a last hole. This starting and stopping operation of the cork strip (8) is repeated until the entire strip is punched.

After the entire strip is punched, the resulting waste is passed to third pair of conveyor belts (15) and out of the system of the invention from these. Such waste can be later reused in other processes of transformation of cork material.

The present invention finds application in the cork industry, namely in the industrial process of producing stoppers.

## Claims

1. A cork stopper punching automatic system **characterized in that** it comprises:
a support frame (3) defining a working plane (P) and having a first end (12) and a second end (13), which define an operating direction (S), the frame comprising:
• a cork strip feeder (1) disposed on said first end (12),
• three cork strip conveyors (2) sequentially arranged in line and separated from one another by a first strip reading space (9) and a second strip punching space (11);
at least three cameras (6) arranged to capture images from the strip reading space (9);
a punching assembly (14) arranged to operate in the strip punching space (11);
a vertical actuator (4) arranged to angularly displace the second end (13) of the support frame (3) or to displace the punching assembly (14) perpendicular to the working plane (P);
a processing unit (22) connected in data communication with the cameras (6), wherein the processing unit (22) comprises controllers for controlling the actuator (4), conveyors (2) and punching assembly (14) in accordance to data from the cameras (6).

2. The system according to claim 1, **characterized in that** each cork strip conveyor (2) is constituted by a pair of conveyor belts (15) parallel to each other, wherein each belt (15) of said pair is arranged perpendicularly to the working plane (P) and is movable parallel to same plane (P), and in the operating direction (S).

3. The system according to claim 2, **characterized in that** at least one of the conveyor belts (15) of said pair is further adjustable perpendicularly to the operating direction (S) to be able to better grip a cork strip (8).

4. The system according to any of claims 1 to 3, **characterized in that** the punching assembly (14) comprises:
• a tubular drill (5) and
• a stopper extraction member (17) disposed within the drill (5),
wherein drill (5) is axially moveable relative to the extraction member (17), which is stationary.

5. The system according to claim 4, **characterized in that** the punching assembly (14) further comprises a stop (16) for receiving the drill (5) at the end of a drilling.

6. The system according to any of the previous claims, **characterized in that** it comprises at least another camera (18) arranged to capture images from the strip punching space (11), wherein said camera (18) is also connected in data communication with the processing unit (22).

## Patentansprüche

1. Automatisches System zum Stanzen von Korkstopfen, **dadurch gekennzeichnet, dass** es umfasst:
einen Stützrahmen (3), der eine Arbeitsebene (P) definiert und ein erstes Ende (12) und ein zweites Ende (13) aufweist, die eine Betätigungsrichtung (S) definieren, wobei der Rahmen umfasst:
• einen Korkstreifen-Zuführer (1), der am besagten ersten Ende (12) angeordnet ist,
• drei Korkstreifen-Förderer (2), die nacheinander in einer Reihe angeordnet sind und durch einen ersten Streifenleseraum (9) und einen zweiten Streifenstanzraum (11) voneinander getrennt sind;
mindestens drei Kameras (6), die angeordnet sind, um Bilder aus dem Streifenleseraum (9) aufzunehmen;
eine Stanzanordnung (14), die angeordnet ist, um in dem Streifenstanzraum (11) zu arbeiten;
einen vertikalen Betätigungshebel (4), der so angeordnet ist, dass er das zweite Ende (13) des Stützrahmens (3) winklig verschiebt oder die Stanzanordnung (14) senkrecht zur Arbeitsebene (P) verschiebt;
eine Verarbeitungseinheit (22), die in Datenkommunikation mit den Kameras (6) verbunden ist, wobei die Verarbeitungseinheit (22) Steuerungen zum Steuern des Betätigungshebels (4), der Förderer (2) und der Stanzanordnung (14) in Übereinstimmung mit Daten aus den Kameras (6) umfasst.

2. System nach Anspruch 1, **dadurch gekennzeichnet, dass** jeder Korkstreifen-Förderer (2) aus einem Paar parallel zueinander verlaufender Förderbänder (15) besteht, wobei jedes Band (15) des besagten Paars senkrecht zur Arbeitsebene (P) angeordnet ist und parallel zur gleichen Ebene (P) und in Arbeitsrichtung (S) bewegbar ist.

3. System nach Anspruch 2, **dadurch gekennzeichnet, dass** mindestens eines der Förderbänder (15) des besagten Paars ferner senkrecht zur Arbeitsrichtung (S) einstellbar ist, um einen Korkstreifen (8) besser greifen zu können.

4. System nach einem der Ansprüche 1 bis 3, **dadurch gekennzeichnet, dass** die Stanzanordnung (14) umfasst:
• einen rohrförmigen Bohrer (5) und
• ein Stopfenausziehelement (17), das innerhalb des Bohrers (5) angeordnet ist,
wobei der Bohrer (5) axial relativ zu dem stationären Stopfenausziehelement (17) bewegbar ist.

5. System nach Anspruch 4, **dadurch gekennzeichnet, dass** die Stanzanordnung (14) ferner einen Anschlag (16) zum Aufnehmen des Bohrers (5) am Ende eines Bohrensvorgangs umfasst.

6. System nach einem der vorangehenden Ansprüche, **dadurch gekennzeichnet, dass** es mindestens eine weitere Kamera (18) umfasst, die zum Erfassen von Bildern aus dem Streifenstanzraum (11) eingerichtet ist, wobei die besagte Kamera (18) auch in Datenkommunikation mit der Verarbeitungseinheit (22) verbunden ist.

## Revendications

1. Système automatique de poinçonnage de bouchons en liège, **caractérisé en ce qu'**il comprend:
Un châssis (3) de support définissant un plan (P) de travail et ayant une première extrémité (12) et une seconde extrémité (13) définissant une direction (S) de fonctionnement, le châssis comprenant:
• Un dispositif (1) d'alimentation de bande de liège disposé sur ladite première extrémité (12),
• Trois convoyeurs (2) de bande de liège disposés en ligne et séparés l'un de l'autre par un premier espace (9) de lecture de bande et un second espace (11) de poinçonnage de bande;
Au moins trois caméras (6) agencées pour capturer des images à partir de l'espace (9) de lecture de bande;
Un ensemble (14) de perforation agencé pour fonctionner dans l'espace (11) de poinçonnage de bande;
Un actionneur (4) vertical agencé pour déplacer angulairement la seconde extrémité (13) du châssis (3) de support ou pour déplacer l'ensemble (14) de perforation perpendiculairement au plan (P) de travail;
Une unité (22) de traitement connectée en communication de données avec les caméras (6), l'unité (22) de traitement comprenant des contrôleurs pour commander l'actionneur (4), les convoyeurs (2) et l'ensemble (14) de perforation conformément aux données des caméras (6).

2. Système selon la revendication 1, **caractérisé en ce que** chaque convoyeur (2) de bande de liège est constitué par une paire de courroies (15) de transport parallèles l'une à l'autre, dans lequel chaque courroie (15) de ladite paire est disposée perpendiculairement au plan (P) de travail et est déplaçable parallèlement au même plan (P) et dans la direction (S) de travail.

3. Système selon la revendication 2, **caractérisé en ce qu'**au moins l'une des courroies (15) de transport de ladite paire est en outre ajustable perpendiculairement à la direction (S) de fonctionnement, afin de pouvoir mieux saisir une bande (8) de liège.

4. Système selon l'une quelconque des revendications 1 à 3, **caractérisé en ce que** l'ensemble (14) de poinçonnage comprend:
• Un foret (5) tubulaire et
• Un élément (17) d'extraction de bouchons, disposé à l'intérieur du foret (5),
dans lequel le foret (5) est axialement mobile, par rapport à l'élément (17) d'extraction, qui est fixe.

5. Système selon la revendication 4, **caractérisé en ce que** l'ensemble (14) de perforation comprend en outre une butée (16) destinée à recevoir le foret (5) à la fin d'un forage.

6. Système selon l'une quelconque des revendications précédentes, **caractérisé en ce qu'**il comprend au moins une autre caméra (18) agencée pour capturer des images depuis l'espace (11) de poinçonnage de bande, ladite caméra (18) étant également connectée en communication de données avec l'unité (22) de traitement.
